# EUROPEAN PATENT APPLICATION

(11) **EP 2 960 035 A1**
(43) Date of publication of application: **30.12.2015**
(21) Application number: 14174159.5
(22) Date of filing: 26.06.2014
(51) Int. Cl.: B29C 33/38, B29C 33/06, B29C 43/52, B29C 45/73, B29C 45/37

(54) **Method and device for injection moulding or embossing/pressing**

(71) Applicant: TCTech Sweden AB, 374 35 Karlshamn (SE)
(72) Inventor: Jäderberg, Jan, SE-16347 Spånga (SE)
(74) Representative: Larsson, Malin

(57) **Abstract**

The present disclosure relates to a tool for injection moulding or embossing/pressing with means for heating an active tool surface, including a coil for generating an oscillating magnetic field in a conductive top layer adjacent to the active tool surface, and an electrically conductive intermediate layer (23), located between the coil carrier layer and the top layer. A thermal resistance layer (29) is located between the intermediate layer and the top layer and comprises a ceramic material thermal spray coating which is bonded to the layer beneath the thermal resistance layer as seen from the active tool surface.

## Description

### Technical field

The present disclosure relates to a tool such as an injection moulding tool or an embossing/pressing tool comprising a heating device. Heating is accomplished by means of a stack of layers that heat an active tool surface, and comprises a coil carrier layer including at least one wound coil for generating an oscillating magnetic field, an electrically conductive top layer, adjacent to the active tool surface, a backing layer, positioned beneath the coil carrier layer as seen from the top layer, the backing layer being electrically connected to the top layer and having a lower resistivity than the top layer, an electrically conductive intermediate layer, located between the coil carrier layer and the top layer, wherein the intermediate layer has a lower resistivity than the top layer, and a thermal resistance layer between the intermediate layer and the top layer.

### Background

Such a device is suggested in WO-2013/002703-A1 where the device can be used e.g. for embossing optical devices with fine surface pattern. One problem with such tools is how to produce a tool in an efficient way.

### Summary

One object of the present disclosure is therefore to achieve a tool that can be produced in a more efficient way. This object is achieved in a tool as defined in claim 1. More specifically, in a tool of the initially mentioned kind, the thermal resistance layer is a ceramic material thermal spray coating which is bonded to the layer beneath the thermal resistance layer as seen from the active tool surface. This produces at least the upper part of the intermediate layer and the thermal resistance layer with which it is coated as a single unit.

To produce flat products with an embossed surface pattern, the top surface of the intermediate layer may be flat, and the thermal resistance layer on top may be machined into a flat shape. This provides an opportunity to compensate e.g. for manufacturing tolerances of the intermediate layer.

Alternatively, the thermal resistance layer may be machined into a three dimensional shape, deviating from a flat, planar shape. This allows also non flat end products to be produced.

Alternatively, it is possible to machine the top surface of the intermediate layer into a three dimensional shape, deviating from a flat shape and apply a thermal resistance layer with uniform thickness over the top surface of the intermediate layer. This allows a three dimensional (non-planar) product to be pressed while maintaining a uniformly thick thermal resistance layer.

The ceramic material thermal spray coating may comprise Yttria stabilized Zirconia, YSZ, which has been found suitable both for thermal spraying and subsequent machining.

A method for embossing/pressing a blank between two tool halves has also been considered, wherein the method includes generating, in at least one of said tool halves, an oscillating magnetic field with at least one wound coil in a coil carrier layer, such that heat is developed in an electrically conductive top layer adjacent to an active tool surface that faces the blank, via an electrically conductive intermediate layer, between the top layer and the coil carrier layer. A thermal resistance layer is located between the intermediate layer and the top layer and the tool halves are pressed together, wherein the method includes bending the blank into a form extending in three dimensions, which form is machined into the thermal resistance layer. This allows a three dimensional, i.e. non planar product to be produced by pressing.

### Brief description of the drawings

Fig 1 illustrates, schematically, a tool for embossing/pressing a blank.
Fig 2 illustrates schematically a tool for injection moulding
Fig 3 illustrates schematically a stack of layers designed to provide efficient heating of a tool surface.
Fig 4 illustrates schematically the induction of currents in the layers of fig 3.
Fig 5 illustrates a procedure for thermal spraying of a thermal resistance layer onto a stack of layers.
Fig 6 shows a layer produced as in fig 5 being machined into a planar shape.
Fig 7 shows a first case where a 3-dimensional shape is achieved.
Fig 8 shows a second case where a 3-dimensional shape is achieved.
Figs 9A-9C illustrates one method for applying a top layer to a 3-dimensional thermal resistance layer.
Fig 10 illustrates a thermal resistance layer sprayed on an active intermediate layer with a 3-dimensional surface.

### Detailed description

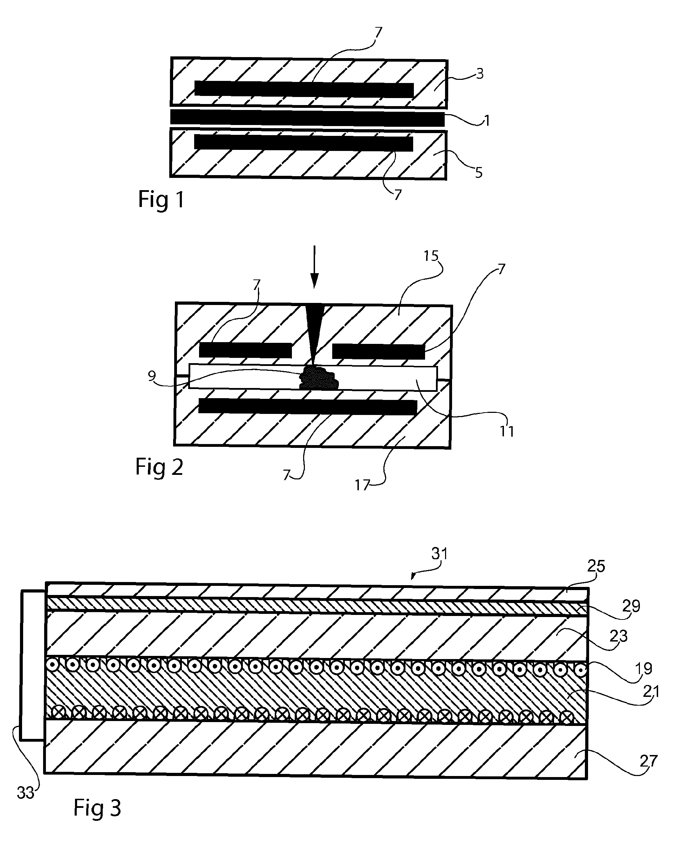

The present disclosure relates to devices and methods for use in forming resins or plastic materials. The following description will mainly describe a system for embossing plastic blanks but, as the skilled person realizes, may be equally applicable to injection moulding and other process-ses, such as blowforming. WO-2013/002703-A1 describes a device for embossing/pressing a blank or for injection moulding. Such a device, as illustrated in fig 1, may have two tool halves 3, 5. Each or one of which may be provided with a heating device 7. In embossing, the blank 1, a solid piece of plastic, is reshaped to some extent by applying heat and pressure in a tool, i.e. pressing the halves against each other while heating the halves at the active surfaces thereof that face the blank 1. Typically, a surface pattern is applied on one or both surfaces.

One example where this technology can be used is when producing lightguides for backlit flatscreen LCD television screens. A transparent rectangular plastic sheet is then provided with a fine surface pattern on one flat surface thereof. When an edge of the sheet is illuminated, the surface pattern makes the injected light exit the lightguide, evenly over the surface. Such a pattern may be achieved by a stamper/top layer which is the layer of a tool half facing the blank at the active surface. Other products produced with embossing are also conceivable, e.g. Fresnel-lenses. In addition to or as an alternative to providing surface patterns (embossing), it is possible to e.g. bend a blank (pressing). Comparatively short cycle times are provided with active heating and cooling, which means that the device has a higher output, as compared to when active heating and optionally cooling is not used. Use of the device is by no means restricted to producing optical components.

The heating and cooling functions disclosed may also be useful in connection with injection moulding. Then, as schematically illustrated in fig 2, molten resin 9 is injected into a cavity 11 formed between two tool halves 15, 17. The heating and cooling of the tool halves may allow for forming thinner structures, and may shorten a production cycle to improve output.

For reference, fig 3 illustrates, schematically and in cross section, a stack of layers as described in WO-2013/002703-A1. The stack is designed to provide efficient heating of an active tool surface 31. By an active tool surface is meant a surface that comes into contact with the plastic or resin to be reshaped. The stack of layers has an inductive coil 19, which can be used to provide tool heating. The stack has a coil carrier layer 21, an electrically active intermediate layer 23, a top layer 25, a backing layer 27, and a thermal resistance layer 29.

The present disclosure is to a great extent directed to improved ways of employing such a thermal resistance layer 29.

The coil carrier layer 21 includes the wound coil 19 and is made of a material with high relative magnetic permeability, e.g. 300 at room temperature, and very high electric resistivity, e.g. 2.5*10⁻³ Ωm. Thus, it is a material that is prone to conduct magnetic fields but that does not convey electric currents to any greater extent. This means that the coil carrier layer 21 will convey and shape the magnetic field, generated therein by the coil 19, to other layers, while not inducing any substantial eddy currents in the coil carrier layer 21 itself. The coil 19 is placed in open grooves in the coil carrier and provides an even distribution of the field over the surface of the coil carrier. PERMEDYN MF1 (trademark) is considered one suitable material for the coil carrier layer and involves granules of ferromagnetic material baked together by an electrically insulating resin. In general, the coil carrier thickness may typically be in the range 10-30mm.

The electrically active intermediate layer 23 comprises a metal with very low resistivity, (typically 1-3*10⁻⁸ Ωm or less), such as copper or aluminum. This layer is denoted as active as the coil induces currents therein which are conveyed to the top layer. However, as the resistivity is so low, those currents do not develop heat in the active intermediate layer to any greater extent. The thickness of the layer may typically be 10-30 mm, the relative magnetic permeability may be close to 1 (non-ferromagnetic) and the thermal conductivity may typically be 100-400 W/m/K.

The top layer 25 may comprise a metal with higher resistivity than the active intermediate layer 23. As the resistivity is higher, this is the layer where the heat will be developed from eddy currents, induced by the coil 19 and via the active intermediate layer 23.

The top layer part may be non-ferromagnetic, and the resistivity may typically be in the range from 1*10⁻⁷-1 *10⁻⁶ Ωm. Thus, the top part is conductive, but considerably less conductive than the intermediate layer. Nickel, one suitable top layer choice, is ferromagnetic. Therefore, the surface of the Nickel sublayer that faces the coils (rather than the active surface) will be heated, which is one reason why the layer may preferably be thin. Another reason is that it is time consuming to electroplate thick materials.

A backing layer 27 (e.g. 2-15 mm thick) is provided on the other side of the coil carrier layer 21, as seen from the active surface 31 that faces the resin or blank to be processed, and may be made of a similar material as the active intermediate layer 23. The backing layer 27 is electrically connected to the top layer 25 by means of a connection 33 as is schematically illustrated in fig 3.

A thermal resistance layer 29 is placed between the active intermediate layer 23, and the top layer 25. The thermal resistance layer 29 serves to obstruct the conveying of heat, from the top layer 25 to the active intermediate layer 23, to some extent, such that the top layer 25 may reach a higher peak temperature. Without this layer, a lower peak temperature would be reached in the top layer during a cycle, as more heat is then continuously removed from the top layer 25 and conveyed to the active intermediate layer 23.

The thickness of the thermal resistance layer is chosen in a trade-off between high top temperatures (thick) and short cycle times (thin). Electrically, the layer may be insulating and the thermal conductivity may typically be about 1 W/m/K. The relative magnetic permeability may be close to 1 (non-ferromagnetic).

The thermal resistance layer also makes the use of ferromagnetic top layers such as Nickel less problematic. Due to the skin effect in ferromagnetic materials, the side of the top layer that faces the coils will primarily be heated. However, thanks to the thermal resistance layer, this thermal energy will be conveyed to the active surface rather than being conveyed to the active intermediate layer.

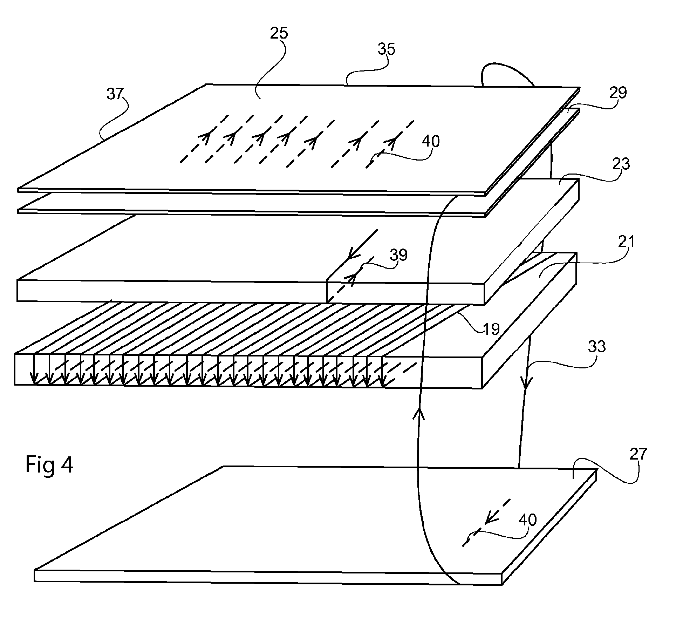

Fig 4 illustrates schematically the induction of currents in the layers of fig 3, the stack of fig 3 being in an exploded perspective view. In the illustrated case, the top layer 25 is rectangular with a 930 mm long side 35 and a 520 mm short side 37. The other layers have corresponding formats. The coil carrier layer 21 is wound with a coil 19 having windings in the direction parallel with the rectangle's short side 37, i.e. the winding turns are located at the long side.

When a high-frequency AC pulse is applied to the coil 19, a current 39, corresponding to the current in the coil 19 will be induced in the lower surface of the active intermediate layer 23. In an example, each tool half may have seven coils, each with 22 winding turns that are synchronously fed, each coil with a 25 kW/25 kHz/10 second pulse during embossing. This current thus created in the active intermediate layer will form a closed current loop at the surface of the active intermediate layer 23 running antiparallel with the neighboring coil current at the lower surface of the active intermediate layer 23 and parallel with the same at the upper (as seen from the top layer 25) surface. Those currents are interconnected at the long edges of the active intermediate layer, and the currents reside primarily in the close vicinity of the active intermediate layer surface due to the skin effect. The AC current in the top surface of the active intermediate layer 23 will in turn induce a current 40 in the top layer 25. As the top layer 25 has a higher resistivity, this layer will develop a considerable amount of heat. The top layer is electrically connected, with connections 33, continuously or at some intervals, at the long sides thereof, to the backing layer 27 to allow this current to flow over the entire top layer surface.

The coil at the backside of the coil carrier will induce a current in the backing layer 27 similar to in the active intermediate layer. This current will have the same direction as, and will be superimposed with, the current 40. Due to its low resistivity, very little heat will develop in the backing layer 27.

The active intermediate layer 23 may be provided with cooling ducts (not shown) to allow cooling of the mould or tool. The ducts may convey a cooling medium such as water or oil. The flow can be continuous, or can be pulsed in order to provide cooling during only one phase of a production cycle.

### Application of ceramic material as thermal resistance layer

In the present disclosure, the thermal resistance layer is improved. In WO-2013/002703-A1 a solid glass layer is used, and another option would be to apply a thin plastic layer such as a polyimide film with low a low coefficient of thermal conductivity, which would allow a thin layer to be used. In the present disclosure, a different approach is used.

The thermal resistance layer is provided as a ceramic layer which is applied as a coating with thermal spraying. One suitable material choice is yttria-stabilized zirconia, YSZ, such as METCO 204-TBC (trademark). The layer may then be machined to a desired shape. Thanks to this procedure, the thermal resistance layer will be bonded to the layer beneath as seen from the to payer, i.e. typically to the acive intermediate layer. This produces at least the upper part of the intermediate layer and the thermal resistance layer with which it is coated as a single unit together with the top layer. That single unit may more efficiently be replaced in a press in order to change from producing one type of product to another.

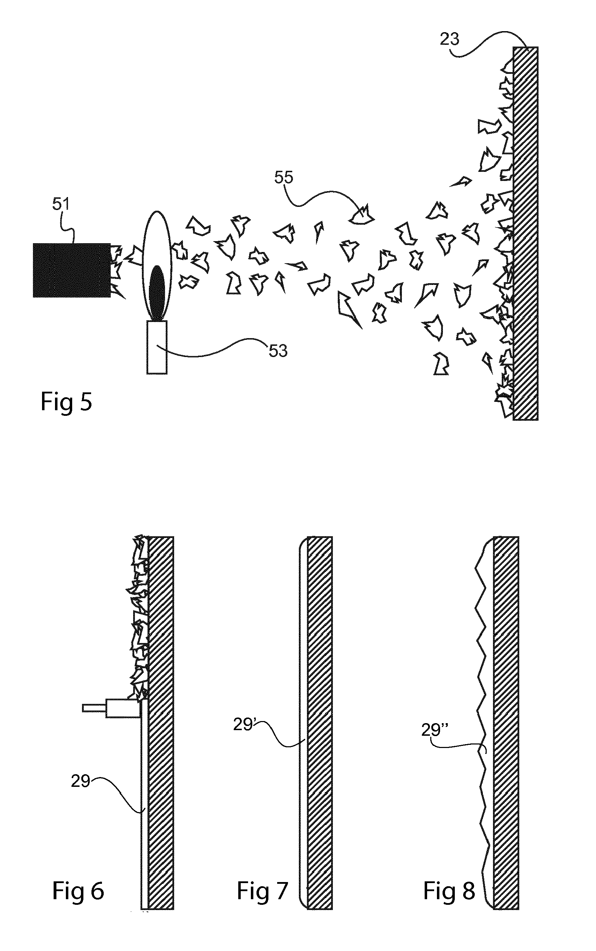

Fig 5 illustrates a procedure for thermal spraying of a thermal resistance layer onto a stack of layers. A coating material 51 is heated to melt by means of a heating device 53 and melted particles 55 are accelerated to collide, in melted form, with the substrate that they are supposed to cover, in this case the active intermediate layer 23. This means, as compared to previous thermal resistance layers, that the layer becomes bonded to the substrate layer. Thermal spraying per se is well known to the skilled person and will not be described in greater detail. Different techniques exist using different ways to melt and accelerate drops of melted material towards a substrate.

Needless to say, the sprayed layer will be uneven, but it has been shown that such a layer can be machined into a planar shape by means of conventional machining techniques as is schematically illustrated in fig 6.

As shown in cross section in fig 7, a 3-dimensional shape, i.e. nonplanar shape, may be achieved. Thus, rather than just imprinting a surface pattern, the arrangement may be used to bend a blank into a desired shape, or be used to injection-mould non planar structures. This is a further advantage with using a sprayed ceramic material. For instance, and as schematically illustrated, a rectangular, shallow bowl shape with rounded corners could be achieved that could produce a part of a housing for e.g. an electronic device. However, as illustrated in fig 8, an arbitrary shape could be produced as long as it would be suitable for pressing/embossing or injection moulding. A non-planar shape can be applied also to a blank of a reinforced plastic material or a laminated plastic material.

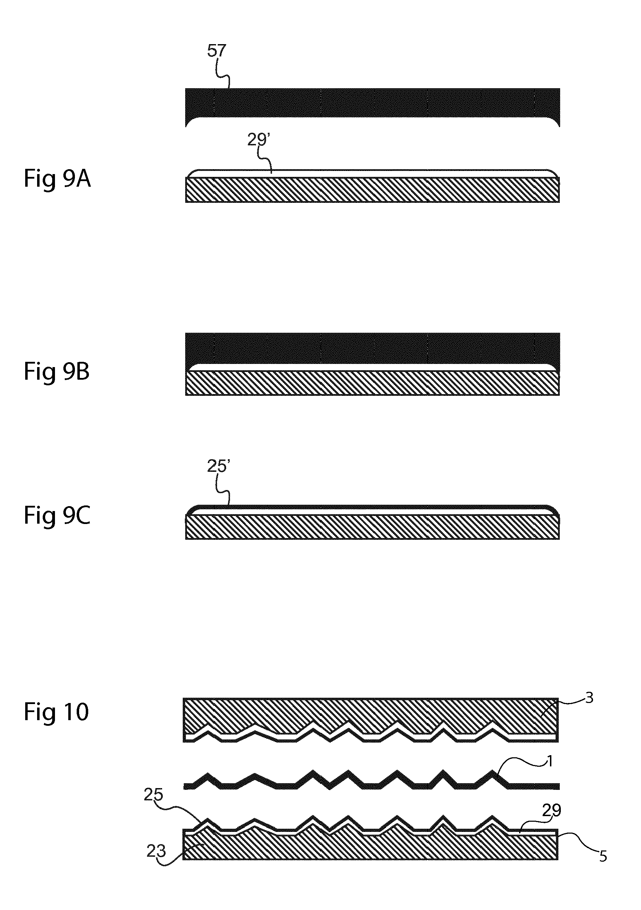

Figs 9A-9C illustrates one method for applying a top layer to a 3-dimensional thermal resistance layer. In this illustrated case a top layer 25' is to be applied on a thermal layer as shown in fig 7. A top layer blank 57 is machined to a form shown in fig 9A that mirrors the shape of the thermal resistance layer 29', and is subsequently bonded, e.g. by means of a thermally conductive glue, to that layer as illustrated in fig 9B. Then, the applied top layer blank is machined on the outer side to form a finished top layer 25'. As an alternative, the top layer may be applied to a machined thermal resistance layer by thermal spraying. Different steel alloys allow such application.

Fig 10 illustrates a thermal resistance 29 layer sprayed on an active intermediate layer 23 with a machined 3-dimensional surface shape. This is another option that becomes available when applying the thermal resistance layer by means of thermal spraying coating. With reference to fig 10, both tool halves may be devised in a similar way, and this applies to the variations described in connection with figs 6-9C as well. As illustrated, the thermal resistance layer may be machined into a uniform thickness such that it follows the shape of the active intermediate layer beneath. This may be advantageous as a more uniform top layer peak temperature may then be achieved, and the active surface will cool more uniformly as compared to if the thermal resistance layer thickness varies over the active surface.

Another advantage with thermal spraying is that it may alternatively compensate for a not fully planar base to which it is applied. For instance, if the active intermediate layer comprises separate sections with joints between different segments, the sprayed layer may compensate for e.g. gaps at the joints.

The thickness of the thermal resistance layer may be e.g. in the range 0.5-5 mm depending on its heat conductive properties and the application in which it is used.

A typical example of materials used may be:

| Layer | Reference | Material | Thickness |
|---|---|---|---|
| Active intermediate | 23 | Aluminum | 20 mm |
| Thermal resistance | 29 | Metco204-TBC (trademark) (ceramic) | 1 mm |
| Top layer | 25 | Stavax ESR (trademark) (steel) | 1 mm |

The present disclosure is not limited to the above describes embodiments. It may be varied and altered in different ways within the scope of the appended claims.

## Claims

1. A tool such as an injection moulding tool or an embossing/pressing tool comprising a heating device including a stack of layers for heating an active tool surface, the stack comprising:
a coil carrier layer (21) including at least one wound coil for generating an oscillating magnetic field,
an electrically conductive top layer (25), being adjacent to the active tool surface,
a backing layer (27), positioned beneath the coil carrier layer as seen from the top layer, the backing layer being electrically connected to the top layer and having a lower resisitivity than the top layer,
an electrically conductive intermediate layer (23), located between the coil carrier layer and the top layer, wherein the intermediate layer has a lower resistivity than the top layer, and
a thermal resistance layer (29) between the intermediate layer and the top layer **characterized by**
the thermal resistance layer (29) being a ceramic material thermal spray coating which is bonded to the layer beneath the thermal resistance layer as seen from the active tool surface.

2. Tool according to claim 1, wherein the top surface of the intermediate layer is flat.

3. Tool according to claim 2, wherein the thermal resistance layer is machined into a flat shape.

4. Tool according to claim 3, wherein the thermal resistance layer is machined into a three dimensional shape, deviating from a flat shape.

5. Tool according to claim 1, wherein the top surface of the intermediate layer is machined into a three dimensional shape, deviating from a flat shape and a thermal resistance layer with uniform thickness is applied over the top surface of the intermediate layer.

6. Tool according to any of the preceding claims, wherein the ceramic material thermal spray coating comprises Yttria stabilized Zirconia, YSZ.

7. A method for an embossing/pressing a blank between two tool halves wherein the method includes generating, in at least one of said tool halves, an oscillating magnetic field with at least one wound coil in a coil carrier layer, such that heat is developed in an electrically conductive top layer adjacent to an active tool surface that faces the blank, via an electrically conductive intermediate layer, between the top layer and the coil carrier layer, wherein a thermal resistance layer is located between the intermediate layer and the top layer and wherein the tool halves are pressed together, **characterized by** bending the blank into a form extending in three dimensions, which form is machined into the thermal resistance layer.
